# EUROPÄISCHE PATENTSCHRIFT

(11) **EP 2 524 803 B1**
(45) Veröffentlichungstag und Bekanntmachung des Hinweises auf die Patenterteilung: **07.12.2016**
(21) Anmeldenummer: 12003808.8
(22) Anmeldetag: 14.05.2012
(51) Int. Cl.: B32B 27/36, B29C 47/06, G06K 19/02, B32B 37/15

(54) **Verfahren zur Herstellung eines Folienverbundwerkstoffs und eines Kartenkörpers**
Method for producing a film composite material and a card body
Procédé de fabrication d'une matière première composite en feuille et d'un corps de carte

(30) Priorität: 20.05.2011 DE 102011102100
(43) Veröffentlichungstag der Anmeldung: 21.11.2012
(73) Patentinhaber: Giesecke & Devrient GmbH, 81677 München (DE)
(72) Erfinder: Riedl, Josef, 85395 Attenkirchen (DE)

(56) Entgegenhaltungen:
- EP-A2- 0 430 282
- WO-A1-01/19612
- WO-A1-2005/110773
- WO-A2-02/41245
- WO-A2-2009/153056
- DE-A1-102007 004 332

## Beschreibung

Die Erfindung betrifft ein Verfahren zur Herstellung eines Folienverbundwerkstoffs, insbesondere zur Verwendung als Schicht in einem Kartenkörper, vorzugsweise in einem Kartenkörper eines tragbaren Datenträgers, ein entsprechendes Verfahren zur Herstellung des Kartenkörpers, sowie den hergestellten Folienverbundwerkstoff und den hergestellten Kartenkörper.

Bei der Fertigung von Kartenkörpern, insbesondere für tragbare Datenträger, wie z.B. Chipkarten, werden mehrere übereinander liegende Kunststofffolien miteinander laminiert, um hierdurch einen stabilen und bruchfesten Kartenkörper zu schaffen. Zur Verbesserung der mechanischen Eigenschaften solcher Kartenkörper ist es vorteilhaft, im Rahmen des Laminierprozesses Folien aus thermoplastischem Elastomer einzusetzen. Diese Folien sind außerordentlich elastisch und können die Bruchfestigkeit des Kartenaufbaus bereits bei geringen Schichtdicken deutlich verbessern. In der EP 430 282 A2 ist ein Kartenkörper in der Form einer mehrschichtigen Ausweiskarte beschrieben, bei der zwischen dem Kartenkern und entsprechenden Deckfolien jeweils eine Schicht aus einem thermoplastischen Elastomer vorgesehen ist.

Die Verarbeitung von Folien aus thermoplastischem Elastomer im Rahmen eines Laminierprozesses bei der Herstellung eines Kartenkörpers erweist sich jedoch als sehr schwierig. Aufgrund ihrer hohen Elastizität sind die Folien sehr lappig. Ferner besitzen solche Folien einen niedrigen Glaspunkt unterhalb des Raumtemperaturbereichs, wodurch sie haftende Eigenschaften aufweisen, was auch als "Blocken" bezeichnet wird. Dies führt beim Stapeln und Verarbeiten der Folien zu Verblockungen, so dass beispielsweise die Folien im Stapel nur schwer vereinzelt und/ oder transportiert werden können. Um beim Laminieren solcher Folien mit anderen Materialien eine ausreichende Verbindungssteifigkeit zu erreichen, ist es zudem erforderlich, den Glaspunkt des jeweils anderen Materials zu erreichen. Da dieser Glaspunkt regelmäßig über dem Schmelzpunkt von thermoplastischen Elastomeren liegt, führt dies häufig zum Ausschwimmen des thermoplastischen Elastomers. Dies hat zur Folge, dass die verwendeten Laminiermaschinen oft gereinigt werden müssen. Unter Umständen können sogar die an dem thermoplastischen Elastomer anliegenden Folien ebenfalls zu fließen beginnen und somit einen gegebenenfalls darauf befindlichen Layout-Druck deformieren. Zwar besteht die Möglichkeit, bei niedrigeren Temperaturen zu laminieren, um hierdurch das Ausschwimmen der Folien zu vermeiden. In diesem Fall wird jedoch in der Regel kein ausreichend guter Laminatverbund erreicht.

EP 384 252 B1 offenbart einen Folienverbundwerkstoff aus einer Vielzahl von Schichten, wobei eine mittlere Schicht aus thermoplastischem Elastomer gebildet ist. An diese Schicht schließen sich Schichten aus thermoplastischen Kunststoffen an. Bei der Herstellung des Verbundwerkstoffs werden auf eine Folie, welche die mittlere Schicht bildet, die weiteren Schichten aufgebracht, beispielsweise durch Coextrudieren.

Die Coextrusion kann prinzipiell als sogenannte Adaptercoextrusion oder als sogenannte Mehrkanaldüsencoextrusion durchgeführt werden. Bei der Adaptercoextrusion werden die von wenigstens zwei Extrudern erzeugten Schmelzeströme in einem Adapter (Feed-Block) übereinander gelegt, um dann in einer üblichen Düse gemeinsam verformt zu werden. Bei der Mehrkanaldüsencoextrusion werden die Schmelzeströme getrennt in die Düse eingeleitet, in separaten Verteilerkanälen verformt und erst innerhalb der Düse miteinander vereint. Bei der Mehrkanaldüsencoextrusion entfällt entsprechend der Adapter. Die Mehrkanaldüsencoextrusion wird jedoch relativ selten verwendet, da der notwendige Anlagenaufbau teuer ist und keine Flexibilität bezüglich anderweitiger Schichtenkombinationen zulässt. Die Adaptercoextrusion ist dagegen kostengünstiger, hat jedoch den Nachteil, dass die Schmelzviskositäten und Extrusionstemperaturen der verschiedenen Schmelzeströme weniger differieren dürfen (typischerweise weniger als ein Faktor 3) als bei der Mehrkanaldüsencoextrusion.

Aus der DE 10 2010 009 242 A1 ist ein Verfahren zur Herstellung eines Folienverbundwerkstoffes zur Verwendung in einem Kartenkörper eines tragbaren Datenträgers bekannt, bei dem in einem Coextrusionsprozess eine Kunststoffinnenschicht aus einem TPC (thermoplastischer Copolyester-Elastomer, im folgenden auch mit der gängigen Abkürzung TPC bezeichnet) mit zwei Kunststoffaußenschichten verbunden wird, wobei die Außenschichten aus PETG oder einem Gemisch von PETG mit einem TPC-Material bestehen. Das eingesetzte TPC besitzt eine Shore D-Härte im Bereich von 33 bis 55 und eine Schmelzviskosität im Bereich von 7 bis 11 cm³/10 Minuten, d.h. eine ganz ähnliche Schmelzviskosität wie PETG, und wird bei einer Extrudertemperatur von maximal 245° C verarbeitet. Die Extrudertemperatur für das PETG liegt zwischen 220 und 260° C. Das bekannte Verfahren liefert einen guten Verbundwerkstoff, eignet sich definitionsgemäß aber vor allem für PETG. Zur Herstellung von Coextrusionsverbünden auf Basis des im Bereich der Kartenherstellung ebenfalls verbreiteten Polycarbonats ist es unmittelbar nicht geeignet, unter anderem weil es bei den angegebenen Temperatureinstellungen keinen ausreichend guten Verbund zwischen TPC und PC liefert und weil Polycarbonat bei den angegebenen Temperaturen wegen seiner hohen Schmelzviskosität zudem schlecht verarbeitbar ist.

Aufgabe der Erfindung ist es ein Verfahren anzugeben, das die Herstellung eines Folienverbundwerkstoffes erlaubt, der auf TPC und Polycarbonat basiert. Diese Aufgabe wird gelöst durch ein Verfahren mit den Merkmalen des Anspruchs 1. Weiterbildungen der Erfindungen sind in den abhängigen Ansprüchen definiert.

Die Erfindung beruht auf der Erkenntnis, dass das durch eine erfindungsgemäße Abwandlung des aus der DE 10 2010 009 242 A1 bekannten Verfahrens auch die Herstellung eines aus TPC und Polycarbonat bestehenden Folienverbundwerkstoffes möglich ist. Dazu wird zum einen ein anderes TPC verwendet, das eine höhere Verarbeitungstemperatur erlaubt, und zum anderen die Verarbeitungstemperatur des Kunststoffes ohne thermoplastisches Elastomer angepasst. Ein nach der Erfindung hergestellter Folienverbundwerkstoff kann im Rahmen der Fertigung eines Kartenkörpers gut verarbeitet werden und führt zu einer Verbesserung der mechanischen Eigenschaften eines damit hergestellten Kartenkörpers.

In dem erfindungsgemäßen Verfahren zur Herstellung eines Folienverbundwerkstoffs werden in einem Coextrusionsprozess zumindest eine erste Kunststoffschmelze aus einem TPC-Kunststoff und zumindest eine zweite Kunststoffschmelze aus einem Kunststoff ohne thermoplastisches Elastomer derart zusammengeführt, dass ein Folienverbundwerkstoff gebildet wird. Dieser Verbundwerkstoff beinhaltet eine äußere erste Schicht bestehend aus einer oder mehreren Lagen aus Kunststoff ohne thermoplastisches Elastomer, eine mittlere zweite Schicht bestehend aus einer oder mehreren Lagen TPC-Kunststoff und eine äußere dritte Schicht bestehend aus einer oder mehreren Lagen wiederum aus Kunststoff ohne thermoplastisches Elastomer. Alle Lagen der mittleren zweiten Schicht umfassen dabei ein thermoplastisches Elastomer auf Basis von Copolyester oder sie bestehen daraus. Dabei unterscheidet sich die erste Kunststoffschmelze für die zweite Schicht hinsichtlich Erweichungstemperatur und Viskosität typischerweise deutlich von der zweiten Kunststoffschmelze für die erste und dritte Schicht. Bevorzugt besteht der Folienverbundwerkstoff aus den drei genannten Schichten.

In Sinne der vorliegenden Schrift ist eine Lage einer Schicht in Normalenrichtung der Schicht an jeder Stelle in der Fläche der Schicht homogen aufgebaut, das heißt sie weist in Normalenrichtung eine gleichbleibende Materialzusammensetzung auf. Eine Lage kann zusätzlich auch in der Fläche homogen sein, das heißt dort eine gleich bleibende Materialzusammensetzung aufweisen. Entsprechend ist eine einlagige Schicht ebenfalls homogen aufgebaut. Eine Schicht kann jedoch auch aus mehreren Lagen bestehen und entsprechend verschiedene Materialzusammensetzungen in ihrer Normalenrichtung aufweisen.

Erfindungsgemäß wird somit in einem einfachen Herstellungsprozess ein Folienverbundwerkstoff geschaffen, der im Rahmen einer späteren Verarbeitung zur Herstellung eines Kartenkörpers gut handhabbar ist. Dies wird dadurch erreicht, dass eine mittlere, ein- oder mehrlagige Schicht, welche thermoplastisches Elastomer umfasst, mit äußeren, ein- oder mehrlagigen Schichten aus einem Kunststoff beschichtet werden, der keine Bestandteile von thermoplastischem Elastomer aufweist und somit steifer als die mittlere Schicht ist. Durch Verwendung geeigneter Materialien für die äußeren Schichten kann insbesondere eine gute Laminierfähigkeit auch bei höheren Temperaturen sowie nicht blockende Eigenschaften für den Verbundwerkstoff erreicht werden. Durch die Verwendung eines Coextrusionsprozesses, bei dem im Unterschied zur oben genannten Druckschrift EP 384 252 B1 alle Kunststoffe im geschmolzenen Zustand vor Verlassen der entsprechenden Breitschlitzdüse des Extruders zusammengeführt werden, wird eine einfache und effiziente Herstellung des Verbundwerkstoffs erreicht.

Bevorzugt enthält die zweite Schicht genau ein thermoplastisches Elastomer auf Basis von Copolyester (TPC) und kein weiteres thermoplastisches Elastomer.

In einer bevorzugten Ausgestaltung wird der Folienverbundwerkstoff derart gebildet, dass er vollständig oder zumindest teilweise einen symmetrischen Aufbau besitzt. Im einfachsten Fall weisen nur die äußeren ersten und dritten Schichten jeweils ausgehend von der mittleren zweiten Schicht eine identische Abfolge von Lagen auf, wobei einander entsprechende, bezüglich der mittleren Schicht symmetrisch liegende Lagen aus den gleichen Materialien aufgebaut sind und gleiche Dicke aufweisen. In diesem Fall kann daher der gleiche Kunststoffschmelzestrom für zwei jeweils bezüglich der mittleren Schicht symmetrisch liegende Lagen der beiden äußeren Schichten verwendet werden und somit die Anzahl der Extruder minimiert werden. Weiterhin liefert ein symmetrischer Aufbau identische außenliegende Lagen der äußeren Schichten, so dass der Folienverbundwerkstoff auf beiden Seiten gleiche Oberflächeneigenschaften aufweist, was die Handhabung während einer späteren Weiterverarbeitung vereinfacht. Alternativ oder zusätzlich sind die Lagen der mittleren Schicht symmetrisch bzgl. einer Mittenebene der mittleren Schicht aufgebaut sein. Dies führt wiederum zu einer Minimierung der Anzahl von notwendigen Extrudern und zu identischen Oberflächeneigenschaften auf beiden Seiten der mittleren Schicht. Bevorzugt ist der gesamte Folienverbundwerkstoff symmetrisch bzgl. einer Mittenebene aufgebaut. Entsprechend weist der Folienverbundwerkstoff auch hier auf beiden Seiten identische Oberflächeneigenschaften auf, was dessen spätere Handhabung insbesondere bei der Herstellung eines Kartenkörpers vereinfacht.

In einer bevorzugten Ausgestaltung des erfindungsgemäßen Verfahrens werden als Kunststoffe für die zumindest eine zweite Kunststoffschmelze Polycarbonat (PC) oder eine Mischung von Polycarbonat mit einem oder mehreren anderen Polyestern (PEC) verwendet. Diese Materialien gewährleisten eine gute Steifigkeit und gute Laminierfähigkeit des Folienverbundwerkstoffs. Bevorzugt ist die erste Schicht und/oder die dritte Schicht einlagig ausgebildet, wodurch die Anzahl der notwendigen Extruder minimiert wird.

Der Kunststoff für die eine Lage oder die mehreren Lagen der mittleren zweiten Schicht enthält einen Anteil eines thermoplastischen Elastomers auf Basis von Copolyester (TPC), der bevorzugt von 100% beträgt oder im Bereich von 50% bis 75% oder von 15% bis 35% liegt. Im ersten Fall handelt es sich somit um reines TPC. Anderenfalls umfasst der Kunststoff zusätzlich beispielsweise die im Zusammenhang mit der ersten und dritten Schicht genannten Kunststoffe oder Kunststoffmischungen, bevorzugt Polycarbonat.

Im einfachsten Fall ist die zweite Schicht einlagig ausgebildet und besteht vorzugsweise vollständig aus TPC. Alternativ besteht die zweite Schicht aus mehreren Lagen, deren jeweiliger Anteil an TPC ausgehend von einer Mittenebene der zweiten Schicht nach außen hin vorzugsweise abnimmt. Dabei besteht die zweite Schicht vorzugsweise aus einer ungeraden Anzahl von Lagen. Beispielsweise ist die zweite Schicht dreilagig ausgebildet, wobei eine zentrale Lage aus reinem TPC besteht oder zumindest einen Anteil davon im Bereich zwischen 50% und 75% enthält, während die beiden außenliegenden Lagen der zweiten Schicht einen geringeren Anteil an TPC im Bereich zwischen 50% und 75% oder im Bereich zwischen 15% und 35% enthalten. Ein solcher verminderter Anteil an TPC in außenliegenden Lagen der zweiten Schicht begünstigt eine gute Verbindung zwischen der zweiten Schicht und den angrenzenden ersten und dritten Schichten des vorliegenden Verbundwerkstoffes, insbesondere dann, wenn der übrige Anteil der außenliegenden Lagen der zweiten Schicht das gleiche Material wie die angrenzenden Lagen der ersten und dritten Schicht enthält. Gegebenenfalls kann auch ein Extrusionskleber zwischen der mittleren zweiten Schicht und den äußeren ersten und dritten Schichten vorgesehen sein, was insbesondere bei einer einlagigen Ausgestaltung der zweiten Schicht aus reinem thermoplastischen Elastomer auf Basis von Copolyester die Haftung zwischen den Schichten verbessert.

Generell müssen in dem Folienverbundwerkstoff aneinanderliegende Schichten zueinander kompatibel sein, das heißt sie müssen sich "chemisch vertragen", was jedoch durch thermoplastische Elastomere, insbesondere auf Basis von Copolyester, und Polymere, wie, regelmäßig erfüllt wird.

In einer weiteren Ausgestaltung des erfindungsgemäßen Verfahrens kann die erste und/ oder zweite und/ oder dritte Schichte transparent und/ oder eingefärbt sein, was durch geeignete Zusatzstoffe (Additive) oder durch die Kunststoffschmelze selbst (Master Batch) erreicht werden kann. Weiterhin kann die erste und/ oder zweite und/ oder dritte Schicht Zusatzstoffe enthalten, die eine Lasermarkierung der Schichten ermöglichen (was z.B. mit Hilfe von Ruß geschehen kann) oder eine Ablösung (Release) begünstigen.

In einer bevorzugten Variante ist die eine Lage oder sind die mehreren Lagen der zweiten Schicht UV-stabilisiert bzw. von sich aus UV-stabil, wobei die eine oder mehreren Lagen der zweiten Schicht vorzugsweise aliphatische Typen von thermoplastischem Elastomer auf Basis von Copolyester umfassen. Diese Typen sind UV-stabiler als aromatische Typen.

In einer bevorzugten Ausgestaltung des erfindungsgemäßen Verfahrens wird ein Folienverbundwerkstoff gebildet, dessen eine oder mehrere Lagen der zweiten Schicht eine Shore D-Härte bevorzugt zwischen 55 und 70 aufweisen. Dabei wird als Material für die einen oder mehreren Lagen der ersten und dritten Schicht vorzugsweise Polycarbonat verwendet.

In einer weiteren Variante wird als Material für die eine oder mehreren Lagen der zweiten Schicht vorzugsweise TPC mit einer Reißdehnung nach DIN 53504 zwischen 200% und 600%, bevorzugt zwischen 250% und 500% verwendet. Kartenkörper mit einem Folienverbundwerkstoff aus den oben genannten Materialien weisen besonders gute Eigenschaften im Hinblick auf Stabilität und Bruchfestigkeit auf.

Bei der Herstellung des Folienverbundwerkstoffes hat es sich als vorteilhaft erwiesen, wenn das verwendete TPC gut vorgetrocknet ist (hygroskopischer Abbau) und einen Restfeuchtegehalt von unter 0,07%, bevorzugt von unter 0,01 % aufweist. Weiterhin ist es von Vorteil, wenn während des Coextrusionsprozesses eine kontinuierliche Förderung der Kunststoffschmelze, die das TPC enthält, gewährleistet ist, da es sonst zu thermischem Abbau kommen kann.

Die Schmelzeviskositäten von Polycarbonat, das beispielsweise in der ersten und dritten Schicht verwendet wird, und thermoplastischen Elastomeren weichen bei typischen Extrusions-Temperaturen in der Regel sehr stark voneinander ab. Zudem ist es in der Regel schwierig diese Schmelzviskositäten direkt miteinander zu vergleichen, da sie typischerweise bei unterschiedlichen Temperaturen angegeben werden, beispielsweise 300°C für Polycarbonat und 230°C für thermoplastische Elastomere. Als Indiz für geeignete Schmelzeviskositäten hat sich daher die sog. Schmelzvolumenrate (MVR - Melt Volume Rate) herausgestellt. Dabei weist ein für die Folienherstellung typischerweise verwendetes Polycarbonat ein Schmelzvolumenrate von 5 auf (beispielsweise bei 300°C und einem Gewicht von 1,2 kg). In diesem Fall weist ein für die Coextrusion mit dem Polycarbonat geeignetes TPC eine Schmelzvolumenrate von 3,5 bis 8 auf (beispielsweise bei 230° und einem Gewicht von 2,16 kg). Bei einer derartigen Schmelzvolumenrate des TPCs kann eine Schmelzeviskosität erreicht werden, die der Schmelzeviskosität von Polycarbonat ausreichend nahe kommt, so dass eine Coextrusion dieser Materialien möglich ist.

Es ist weiterhin vorteilhaft, wenn das Coextrusionsverfahren bei einer möglichst hohen Temperatur durchgeführt wird. Das erfindungsgemäße Coextrusionsverfahren wird daher zweckmäßig bei einer Extrusionstemperatur von 250 °C bis 270 °C ausgeführt. Bevorzugt wird es bei noch höheren Temperaturen durchgeführt, nämlich bei einer Extrusionstemperatur von über 270°C. Das eingesetzte TPC muß dabei den angelegten Temperaturen ebenfalls standhalten. Es weist dann eine entsprechende thermische Stabilität auf.

In einer weiteren Ausführungsform wird mit dem Herstellungsverfahren ein Folienverbundwerkstoff gebildet, dessen zweite Schicht eine Dicke zwischen 20 µm und 100 µm, insbesondere zwischen 30 µm und 60 µm, aufweist, wobei die Gesamtdicke des Folienverbundwerkstoffs vorzugsweise zwischen 50 µm und 350 µm, bevorzugt zwischen 70 µm und 150 µm, liegt und besonders bevorzugt 105 µm beträgt. In manchen Fällen kann es von Vorteil sein, wenn alle Lagen des gebildeten Folienverbundwerkstoffs dieselbe Dicke aufweisen. Derartige Dicken gewährleisten eine ausreichende Stabilität des Folienverbundwerkstoffs bei dessen Verarbeitung und führen ferner zu guten Materialeigenschaften eines Kartenkörpers, der diesen Folienverbundwerkstoff enthält. Insbesondere wird dadurch eine ausreichende Menge von thermoplastischem Elastomer auf Basis von Copolyester innerhalb des gebildeten Folienverbundwerkstoffs gewährleistet, wodurch dieser eines ausreichende Elastizität besitzt und auftretende Spannungen und Kräfte abfedern kann.

Durch dieses erfindungsgemäße Coextrusionsverfahren lassen sich Folienverbundwerkstoffe herstellen, deren mittlere Schicht elastisch ist und beidseitig von laminierfähigem, steifem und nicht blockendem Polymermaterial, insbesondere Polycarbonat umgeben ist. Damit lassen sich thermoplastische Elastomerschichten preisgünstig und ohne Handhabungsprobleme in die üblichen Prozesse der Kartenkörperherstellung integrieren. Bevorzugt wird das erfindungsgemäße Verfahren als Adaptercoextrusion durchgeführt, was einen kostengünstigen und flexiblen Aufbau der Coextrusionsanlage gewährleistet.

In praktischen Versuchen besaß ein Extruder zur Bereitstellung einer coextrudierten Kunststoffschmelze, die thermoplastisches Elastomer auf Basis von Copolyester enthält oder daraus besteht, einen Schneckendurchmesser D von 45 mm, wobei sich eine Schneckenlänge zwischen 25 x D und 30 x D als besonders zweckmäßig erwies, die Länge der Einzugszone (Feed Section) lag zwischen 7 x D und 10 x D, die Länge der Kompressions- oder Umwandlungszone (Compression Section) zwischen 4 x D und 6 x D, und/ oder die Länge der Ausstoßzone (Metering Section) zwischen 8 x D und 11 x D.

Neben dem oben beschriebenen Verfahren umfasst die Erfindung ferner einen Folienverbundwerkstoff, welcher mit diesem Verfahren hergestellt ist.

Die Erfindung betrifft ferner ein Verfahren zur Herstellung eines Kartenkörpers, insbesondere für einen tragbaren Datenträger, bei dem ein Folienverbundwerkstoff mit dem oben beschriebenen erfindungsgemäßen Verfahren hergestellt wird bzw. ein solcher Folienverbundwerkstoff bereitgestellt wird und bei dem eine Vielzahl von Schichten aus Kunststoff umfassend zumindest eine Schicht aus dem Folienverbundwerkstoff miteinander laminiert werden. Ein guter Laminatverbund wird dabei üblicherweise durch ein Laminieren bei einer Temperatur von zwischen 120 °C und 200 °C erreicht, insbesondere zwischen 130 °C und 180 °C. Der Druck beim Laminieren liegt vorzugsweise zwischen 10 bar und 60 bar, beispielsweise bei 50 bar. Das Laminieren bei Verwendung von reinem Polycarbonaterfolgt vorzugsweise bei Temperaturen zwischen 175 °C und 180 °C bei einem Druck von 50 bar.

Vorzugsweise wird das Laminieren in einer Heizstation und einer Kühlstation durchgeführt, wobei der Druck in der Heizstation zwischen 10 bar und 40 bar (100 N/cm² bis 400 N/cm²), bevorzugt zwischen 12,5 bar und 35 bar (125 N/cm² bis 350 N/cm²) liegt. Demgegenüber liegt der Druck in der Kühlstation vorzugsweise zwischen 20 bar und 70 bar (200 N/cm² bis 700 N/cm²), besonders bevorzugt zwischen 25 bar und 60 bar (250 N/cm² bis 600 N/cm²). Die Laminierzeit liegt in der Heiz- und/ oder Kühlstation vorzugsweise jeweils zwischen 13 min und 25 min.

In einer bevorzugten Ausführungsform des Herstellungsverfahrens des Kartenkörpers bestehen beim Laminieren der Schichten zumindest eine, zweckmäßig beide Deckschichten aus dem Folienverbundwerkstoff. Diese Variante hat den Vorteil, dass bei der Verwendung des erfindungsgemäßen Folienverbundwerkstoffs der grundsätzliche Aufbau des Kartenkörpers nicht verändert werden muss, sondern lediglich die bekannten Overlay-Folien (beispielsweise aus Polycarbonat) durch den Folienverbundwerkstoff ersetzt werden müssen.

Dabei gleichen die Schichten der Folienverbundwerkstoffe Spannungen, die beim Laminieren innerhalb des Kartenkörpers auftreten können aus, vor allern wenn mikroelektronische Komponenten implantiert werden, so dass der hergestellte Kartenkörper weniger Spannungen aufweist und entsprechend stabiler ist. Ebenso werden Umwelteinflüsse durch mechanische, chemische und/ oder UV-Strahlungs-Belastungen durch die Folienverbundwerkstoffe ebenfalls gut kompensiert. Mit anderen Worten führt bereits der Austausch der üblicherweise in Kartenkörpern verwendeten Deckfolien (Overlayfolien) durch den erfindungsgemäßen Verbundwerkstoff zu einer deutlichen Verbesserung der Eigenschaften des Kartenkörpers hinsichtlich der dynamischen Biegebeanspruchung, Spannungsrißempfindlichkeit und Schlagbeanspruchung.

Alternativ oder zusätzlich können auch die den Kartenkern des Kartenkörpers bildende Schichten ein thermoplastisches Elastomer, insbesondere auf Basis von Copolyester, umfassen, wodurch die mechanischen Eigenschaften und die Stabilität des Kartenkörpers weiter erhöht werden.

In einer weiteren bevorzugten Variante des Herstellungsverfahrens bestehen die eine oder mehreren Lagen der äußeren ersten und/ oder dritten Schicht des Folienverbundwerkstoffs aus dem gleichen Material wie diejenige Schicht, die sich beim Laminieren des Kartenkörpers mit der jeweils äußeren Lage der ersten und/ oder dritten Schicht verbindet. Hierdurch wird ein sehr gutes Verschmelzen des Folienverbundwerkstoffs mit dem restlichen Schichtaufbau des Kartenkörpers erreicht.

Neben dem soeben beschriebenen Herstellungsverfahren umfasst die Erfindung ferner einen Kartenkörper, insbesondere für tragbare Datenträger, umfassend eine Vielzahl von übereinander laminierten Schichten, wobei der Kartenkörper mit diesen Herstellungsverfahren hergestellt ist.

Ausführungsbeispiele der Erfindung werden nachfolgend anhand der beigefügten Figuren detailliert beschrieben.

Es zeigen:
- Fig. 1: den Schichtaufbau eines Folienverbundwerkstoffs, der mit einer ersten Variante des erfindungsgemäßen Verfahrens erhalten wurde;
- Fig. 2: den Schichtaufbau eines Folienverbundwerkstoffs, der mit einer zweiten Variante des erfindungsgemäßen Verfahrens erhalten wurde;
- Fig. 3: den Schichtaufbau eines Folienverbundwerkstoffs, der mit einer dritten Variante des erfindungsgemäßen Verfahrens erhalten wurde;
- Fig. 4: den Schichtaufbau eines Folienverbundwerkstoffs, der mit einer vierten Variante des erfindungsgemäßen Verfahrens erhalten wurde;
- Fig. 5: den Schichtaufbau eines Kartenkörpers, umfassend Schichten aus einem mit dem erfindungsgemäßen Verfahren hergestellten Folienverbundwerkstoff; und
- Fig. 6: eine besonders bevorzugte Variante eines erfindungsgemäßen Schichtaufbaus eines Kartenkörpers.

Alle im Folgenden beschriebenen Ausführungsformen von Folienverbundwerkstoffen zeichnen sich dadurch aus, dass sie in einem Coextrusionsprozess, insbesondere in einem Adaptercoextrusionsprozess, hergestellt werden, bei dem die einzelnen Kunststoffschmelzen vor dem Durchtritt durch die bei der Coextrusion verwendete Breitschlitzdüse zusammengeführt werden.

Dabei werden in dem Coextrusionsprozess eine oder mehrere Kunststoffschmelzen aus einem Material umfassend ein thermoplastisches Elastomer auf Basis von Copolyester (thermoplastischer Copolyester-Elastomer, im folgenden auch mit der gängigen Abkürzung TPC bezeichnet) mit einer oder mehreren Schmelzen aus einem steiferem Kunststoffmaterial ohne thermoplastisches Elastomer (thermoplastisches Elastomer, im folgenden auch mit der gängigen Abkürzung TPE bezeichnet) zu einem Verbundwerkstoff verbunden. Der resultierendeVerbundwerkstoff besteht aus einer oder mehreren mittleren Schichten aus TPC und einer oder mehreren daran anschließenden äußeren Schichten aus steiferem Material ohne TPE.

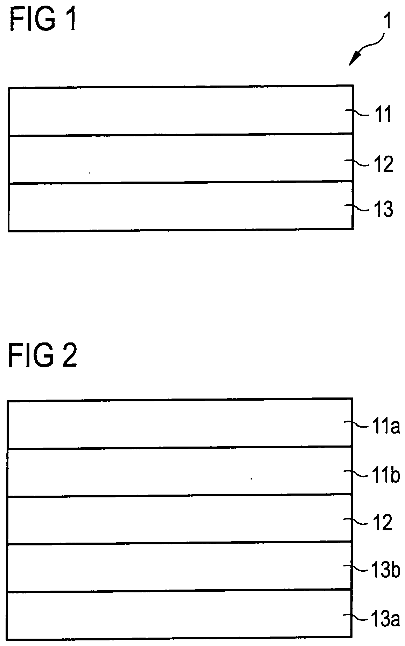

Fig.1 zeigt eine erste Ausführungsform eines Folienverbundwerkstoffs 1, der mit dem erfindungsgemäßen Coextrusionsprozess erhalten wurde. Der Folienverbundwerkstoff umfasst eine einlagige obere äußere Schicht 11, eine einlagige mittlere Schicht 12 und eine einlagige untere äußere Schicht 13. Die mittlere Schicht 12 besteht aus reinem TPC. Für die beiden äußeren Schichten 11,13 wird als Material Polycarbonat (im folgenden auch als PC bezeichnet) eingesetzt. Alternativ kann für die äußeren Schichten 11,13 ein Blend aus Polycarbonat und einem oder mehreren anderen Polyestern (im folgenden auch als PEC bezeichnet) eingesetzt werden, das Mischungsverhältnis von PC zu den anderen Polyestern in dem PEC kann dabei z.B. 1:2 oder 2:1 betragen.

Vorzugsweise bestehen die einlagigen Schichten 11 und 13 aus dem gleichen Material. Der Folienverbundwerkstoff gemäß der ersten Ausführungsform umfasst mithin nur zwei verschiedene Materialien und kann daher unter Verwendung von nur zwei Extrudern hergestellt werden.

Es besteht aber auch die Möglichkeit, dass sich die Materialien der äußeren Schichten 11,13 durch Additive voneinander unterscheiden. Beispielsweise kann die Schicht 11 transparent sein, während die Schicht 13 durch den Zusatz von Additiven nicht mehr transparent ist und z.B. weiß gefärbt ist. Die Gesamtdicke des Schichtaufbaus der Fig.1 beträgt 105 µm, wobei die Schichten nicht die gleiche Schichtdicke aufweisen müssen. Die Dicke einer einzelnen der drei einlagigen Schichten 11,12,13 kann z.B. 35 µm betragen.

Fig. 2 zeigt eine zweite Ausführungsform einer Folienstruktur, die mit dem erfindungsgemäßen Verfahren erhalten wurde. Die Folienstruktur umfasst wiederum eine einlagige mittlere Schicht 12 aus TPC. Im Unterschied zur Ausführungsform der Fig.1 sind auf beiden Seiten der mittleren Schicht 12 jetzt zwei jeweils zweilagige äußere Schichten 11a und 11b bzw. 31a und 31b vorgesehen. Diese Lagen bestehen wiederum aus einem Material ohne TPE, nämlich PC oder einer Mischung von PC mit Polyester (PEC). Alle Lagen der äußeren Schichten 11a, 11b, 31a, 31b können dabei aus dem gleichen Kunststoff oder aus unterschiedlichen Kunststoffen, gegebenenfalls mit verschiedenen Additiven, bestehen. Die Gesamtdicke der Folienstruktur der Fig. 2 beträgt wiederum 105 µm, wobei eine einzelne Lage z.B. eine Dicke von 21 µm aufweisen kann.

Der Typ des für die Schicht 12 verwendeten TPC-Kunststoffs in der Folienstruktur der Fig.1 bzw. Fig. 2 ist hinsichtlich seiner Temperaturstabilität auf den Polymertyp der außen liegenden Schichten 11, 11a, 11b, 31,31a, 31b im Folienverbund abgestimmt, d.h. auf PC bzw. eine Mischung von PC mit Poyester (PEC). Da diese Materialien temperaturstabiler sind als z.B. PETG, werden entsprechend härtere und temperaturstabilere TPC-Typen für die mittlere Schicht verwendet. Modellhaft können Folien aus TPC als Folge von harten und weichen Bereichen beschrieben werden. Ausgehend von diesem Modell stehen für die Verbindung mit PC verschiedene TPC-Kunststoffe zur Verfügung, bei denen durchweg das Verhältnis von weichen Bereichen zu harten Bereichen kleiner ist als etwa bei einem TPC-Material, das mit PETG verbunden werden soll. Aus den zur Verfügung stehenden TPC-Materialen wird jeweils eines ausgewählt, das auf das Material der angrenzenden Schichten aus PC bzw. aus PC mit PEC abgestimmt ist. Die Auswahl wird vor allem auch dadurch bestimmt, dass das Coextrusionsverfahren vorzugsweise bei einer Extrusionstemperatur des PCs bzw. der Mischung (PEC) von PC mit Polyester von 270°C und darüber ausgeführt wird. Die Extrusionstemperatur für das TPC beträgt mindestens 235 °C, typischerweise 245°C und mehr.

Vorzugsweise wird deshalb für die mittlere Schicht 12 ein TPC-Kunststoff mit einer Shore-Härte D von 45 bis 70 verwendet, der einer Massetemperatur von mindestens 245°C standhält. Die Shore-Härte liegt dabei bevorzugt am oberen Ende des genannten Bereichs, d.h. bei Werten von über 55. In Versuchen wurde ein TPC-Kunststoff mit einer Shore D-Härte von 63 eingesetzt; der eingesetzte TPC-Kunststoff wies dabei eine Schmelzvolumenrate (MVR) von 4 cm³/10min auf und besaß eine Bruchspannung von 35 MPa; zum Vergleich: auf PETG abgestimmte TPCs besitzen Schmelzvolumenraten (MVR) in der Größenordnung von 10 cm³/10min und Bruchspannungen im Bereich von 13 MPa bei Shore-Härten D im Bereich von 35. Als geeignete TPC-Materialien haben sich z.B. die Typen Arnitel EM 550, Arnitel EM 630, Arnitel EM 740, oder Arnitel ECO L-X07110 des Herstellers DSM erwiesen. Für das PC wird z.B. Calibre 201-06 oder Makrolon 3208 verwendet.

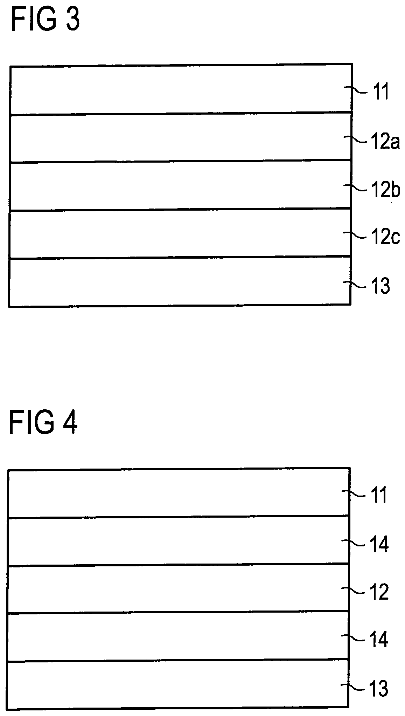

In den zuvor beschriebenen Ausführungsformen wurde reiner TPC-Kunststoff für die mittlere Schicht L2 verwendet. Um den Coextrusionsprozess zu verbessern können aber auch Mischungen von TPC mit anderen Kunststoffen wie PC oder PEC verwendet werden. Eine Ausführungsform eines solchen Schichtaufbaus ist in Fig. 3 gezeigt. In dieser Folienstruktur bestehen die einlagigen äußeren Schichten 11 und 13 aus PC, eventuell mit antiblockierenden Additiven bzw. Additiven, welche die Schicht laserbar einstellen. Anstatt einer einlagigen mittleren Schicht umfasst der Schichtaufbau der Fig. 3 nunmehr eine dreilagige mittlere Schicht 12a, 12b, 12c. Wie zuvor erwähnt, sind die für diese Lagen verwendeten Materialien keine reinen TPC-Kunststoffe mehr, sondern Kunststoffmischungen mit lediglich einem Anteil von TPC. In einer bevorzugten Variante handelt es sich bei der Schicht 12a um eine PC- oder PEC-Schicht mit ca. 15% bis 35% TPC-Anteil. Die Schicht 12b ist ebenfalls eine PC- oder eine PEC-Schicht mit ca. 50% bis 75% Anteil an TPC. Für die Schicht 12c wird ein PC-Kunststoff verwendet, der analog zur Schicht 12a wiederum einen Anteil von ca. 15% bis 35% an TPC aufweist. Auch in diesem Ausführungsbeispiel weisen sämtliche Lagen eine Dicke von 21 µm auf. In einer Variante dieser Ausführungsform besteht die mittlere Lage 12b der zweiten Schicht aus reinem TPC.

Fig. 4 zeigt eine weitere Variante eines Schichtaufbaus aus Fig. 1, der eine gute Verbindung zwischen dem für die mittlere Schicht 12 verwendeten TPC-Kunststoff mit den Kunststoffen der äußeren Schichten 11,13 über einen Extrusionskleber gewährleistet. Die Ausführungsform der Fig. 4 umfasst eine einlagige mittlere Schicht 12 aus reinem TPC-Kunststoff sowie zwei äußere einlagige Schichten 11 und 13, welche aus PC oder PEC bestehen, eventuell wiederum mit antiblockierenden Zusätzen bzw. Zusätzen, welche die Laserfähigkeit des Materials gewährleisten. Zur Verbindung der TPC-Schicht 12 mit den äußeren Schichten 11 und 13 wird im Rahmen des Coextrusionsprozesses ein geeigneter Extrusionskleber verwendet, der als Zwischenschicht 14 zwischen den Schichten 11 und 12 bzw. den Schichten 12 und 13 eingebracht wird.

Der nach dem vorstehend beschriebenen Verfahren hergestellte Folienverbundwerkstoff 1 wird im Rahmen der Fertigung eines Kartenkörpers für einen tragbaren Datenträger, insbesondere einer Chipkarte, eingesetzt. Durch die Verwendung von TPC wird dabei eine hohe Flexibilität und Reißfestigkeit des Kartenkörpers erreicht, wobei ferner durch die Integration des TPC-Materials in einem Verbundwerkstoff mit äußeren laminierfähigen und steiferen Materialien eine sehr gute Verarbeitbarkeit des Werkstoffs im Rahmen eines Laminierprozesses gewährleistet wird.

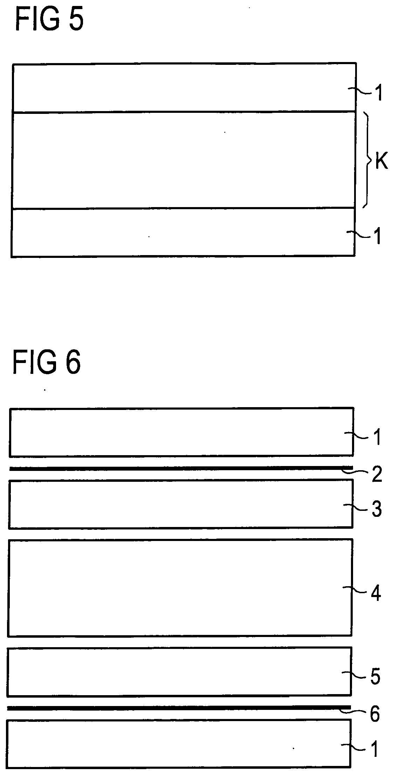

Fig. 5 zeigt schematisch eine bevorzugte Ausführungsform eines Kartenkörpers, in dem im Rahmen eines Laminierprozesses ein im Vorangegangenen beschriebener Folienverbundwerkstoff eingebracht wurde. In Fig. 5 sind Schichten aus Folienverbundwerkstoff mit dem Bezugszeichen 1 bezeichnet. Dabei sind in dem Kartenkörper zwei Schichten aus Folienverbundwerkstoff 1 als Overlay-Schichten auf dem eigentlichen Kartenkern K aufgebracht. Der Kartenkern K kann aus einer bis sieben Folien bestehen und setzt sich aus Standardmaterialien zusammen, die herkömmlicherweise in Kartenkörpern für Datenträger eingesetzt werden. Diese Materialien umfassen insbesondere PVC, ABS, Polyester, Polycarbonat, PEC und dergleichen. Die Dicke der jeweiligen Folienverbundwerkstoff-Schichten 1 liegt dabei in den bereits oben erwähnten Bereichen zwischen 50 µm und 350 µm, bevorzugt zwischen 70 µm und 150 µm, und beträgt besonders bevorzugt 105 µm. Demgegenüber liegt die Dicke des Kartenkerns K zwischen 100 µm und 700 µm, insbesondere zwischen 200 µm und 600 µm.

Der Kartenkörper der Fig. 5 wird in einem geeigneten Laminierprozess hergestellt. Je nach verwendetem Material für die äußeren Folienverbundwerkstoff-Schichten 1 erfolgt das Laminieren bei Temperaturen zwischen 120 °C und 200 °C, bevorzugt bei 125 °C bis 190 °C und besonders bevorzugt bei 130 °C bis 180 °C. Der Laminierprozess wird dabei zweckmäßig in einer Heiz- und in einer Kühlstation durchgeführt, wobei die in diesen Stationen angewendeten Drücke in Bereichen liegen, wie sie bereits weiter oben definiert wurden. Die Laminierzeit bei einer 10-Lagen-Laminierung liegt sowohl in der Kühl- als auch in der Heizstation vorzugsweise zwischen 13 und 25 min.

Fig. 6 zeigt eine spezielle Ausführungsform eines bevorzugten Schichtaufbaus eines Kartenkörpers gemäß einer Ausführungsform der Erfindung. In Analogie zu Fig. 5 sind für die äußeren Folienverbundwerkstoff-Schichten 1 wiederum die erfindungsgemäßen Folienverbundwerkstoffe umfassend TPC-Kunststoff eingesetzt. Zwischen den beiden Folienverbundwerkstoff-Schichten 1 liegt ein Schichtaufbau aus einer Farbschicht 2, die gegebenenfalls weggelassen werden kann, einer dünnen Schicht 3 aus Thermoplast-Folie, einer dickeren Schicht 4 aus Thermoplast-Folie sowie wiederum einer dünnen Schicht 5 aus Thermoplast-Folie. An diese Schicht 5 schließt sich eine weitere Farbschicht 6 an, die analog zur Farbschicht 2 auch weggelassen werden kann. Der Aufbau wird dann durch die untere Folienverbundwerkstoff-Schicht 1 abgeschlossen.

Die im Vorangegangenen beschriebenen Ausführungsformen der Erfindung weisen eine Reihe von Vorteilen auf. Bei der Herstellung eines Kartenkörpers wird eine gute Verarbeitbarkeit von hochelastischem TPC-Kunststoff durch Integration in einen coextrudierten Folienverbundwerkstoff gewährleistet. Insbesondere werden durch die äußeren Schichten des Folienverbundwerkstoffs eine ausreichende Laminierfähigkeit und Steifigkeit gewährleistet.

Durch die Verwendung des coextrudierten Folienverbundwerkstoffs werden die mechanischen Eigenschaften des Kartenkörpers verbessert. Dabei reicht es meistens schon aus, die beiden außen liegenden Overlay-Folien gegen den coextrudierten Folienverbundwerkstoff mit TPC-Kunststoff auszutauschen, wie dies in Fig. 5 und Fig. 6 gezeigt ist. Hierdurch wird erreicht, dass der herkömmliche restliche Aufbau des Kartenkörpers beibehalten werden kann. Somit kann auf einfache Weise durch geringe Abwandlungen eines herkömmlichen Herstellungsprozesses ein Kartenkörper mit verbesserten mechanischen Eigenschaften geschaffen werden. Es können im übrigen zusätzlich auch andere Folien oder alle Folien im Aufbau mit TPC ausgestattet sein.

## Patentansprüche

1. Verfahren zur Herstellung eines Folienverbundwerkstoffs (1) zur Verwendung als Schicht oder Folie in einem Kartenkörper eines tragbaren Datenträgers, wobei in einem Coextrusionsprozess zumindest eine erste Kunststoffschmelze aus Kunststoff umfassend ein thermoplastisches Elastomer auf Basis von Copolyester (TPC) und zumindest eine zweite Kunststoffschmelze aus einem Kunststoff ohne thermoplastisches Elastomer derart zusammengeführt werden, dass ein Folienverbundwerkstoff gebildet wird, der eine äußere erste Schicht bestehend aus einer oder mehreren Lagen (11; 11a, 11b) des Kunststoff ohne thermoplastisches Elastomer, eine mittlere zweite Schicht bestehend aus einer oder mehreren Lagen (12; 12a, 12b, 12c) des Kunststoffs jeweils umfassend ein thermoplastisches Elastomer auf Basis von Copolyester (TPC) und eine äußere dritte Schicht aus einer oder mehreren Lagen (13; 13a, 13b) des Kunststoff ohne thermoplastisches Elastomer aufweist, **dadurch gekennzeichnet, dass** die zweite Kunststoffschmelze Polycarbonat oder eine Mischung von Polycarbonat mit mindestens einem anderen Polyester (PEC) ist, und dass der Coextrusionsprozess bei einer Extrusionstemperatur des Polycarbonats bzw. der Mischung aus Polycarbonat mit mindestens einem anderen Polyester von 270°C oder höher durchgeführt wird.

2. Verfahren nach Anspruch 1, **dadurch gekennzeichnet, dass** in dem gebildeten Folienverbundwerkstoff (1) die äußeren Schichten (11;11a, 11b; 13; 13a, 13b) ausgehend von der mittleren Schicht (12,12a, 12b, 12c) eine identische Abfolge von Lagen aufweisen oder die mittlere Schicht einen symmetrischen Aufbau besitzt, oder dass der gebildete Folienverbundwerkstoff einen symmetrischen Aufbau besitzt.

3. Verfahren nach Anspruch 1 oder 2, **dadurch gekennzeichnet, dass** das verwendete thermoplastische Elastomer auf Basis von Copolyester (TPC) vorgetrocknet wird, so dass es einen Restfeuchtegehalt von unter 0,07%, bevorzugt von unter 0,01% aufweist.

4. Verfahren nach Anspruch 1, 2 oder 3, **dadurch gekennzeichnet, dass** die eine Lage oder die mehreren Lagen der zweiten Schicht (12; 12a, 12b, 12c) jeweils einen Anteil an thermoplastischem Elastomer auf Basis von Copolyester von 100%, von 50% bis 75% oder von 15% bis 35% umfassen und im übrigen vorzugsweise aus Polycarbonat, oder einer Mischung von Polycarbonat mit einem oder mehreren anderen Polyestern (PEC) bestehen.

5. Verfahren nach einem der vorhergehenden Ansprüche, **dadurch gekennzeichnet, dass** ein Folienverbundwerkstoff (1) gebildet wird, dessen zweite Schicht (12; 12a, 12b, 12c) eine Shore D-Härte zwischen 45 und 70, bevorzugt zwischen 55 und 70, aufweist und/ oder dass das thermoplastische Elastomer auf Basis von Copolyester (TPC) eine Schmelzvolumenrate (MVR) zwischen 3,5 und 8 aufweist.

6. Verfahren nach einem der vorhergehenden Ansprüche, **dadurch gekennzeichnet, dass** die Gesamtdicke des gebildeten Folienverbundwerkstoffs (1) zwischen 50 µm und 350 µm, bevorzugt zwischen 70 und 150 µm liegt und besonders bevorzugt 105 µm beträgt.

7. Folienverbundwerkstoff (1), **dadurch gekennzeichnet, dass** der Folienverbundwerkstoff mit einem Verfahren nach einem der vorhergehenden Ansprüche hergestellt ist.

8. Verfahren zur Herstellung eines Kartenkörpers, insbesondere für einen tragbaren Datenträger, **dadurch gekennzeichnet, dass** ein Folienverbundwerkstoff (1) nach einem Verfahren nach einem der Ansprüche 1 bis 6 hergestellt wird oder ein solcher Folienverbundwerkstoff (1) bereitgestellt wird und eine Vielzahl von Schichten (1, 2, ..., 6) aus Kunststoff umfassend zumindest eine Schicht aus dem Folienverbundwerkstoff (1) miteinander laminiert werden.

9. Verfahren nach Anspruch 8, **dadurch gekennzeichnet, dass** das Laminieren bei einer Temperatur von zwischen 120°C und 200°C erfolgt, insbesondere zwischen 125°C und 190°C, vorzugsweise zwischen 130°C und 180°C, besonders bevorzugt zwischen 130°C und 140°C oder zwischen 175°C und 185°C, wobei der Druck beim Laminieren vorzugsweise zwischen 10 und 60 bar liegt, insbesondere bei 50 bar.

10. Verfahren nach Anspruch 8 oder 9, **dadurch gekennzeichnet, dass** beim Laminieren der Schichten (1, 2, ..., 6) zumindest eine der Deckschichten und insbesondere beide Deckschichten aus dem Folienverbundwerkstoff (1) bestehen.

11. Kartenkörper, insbesondere für tragbare Datenträger, umfassend eine Vielzahl von übereinander laminierten Schichten (1, 2,..., 6), **dadurch gekennzeichnet, dass** der Kartenkörper mit einem Verfahren nach einem der Ansprüche 8 bis 10 hergestellt ist.

## Claims

1. A method for manufacturing a foil composite material (1) for use as a layer or foil in a card body of a portable data carrier, wherein in a coextrusion process at least one first plastic melt of plastic comprising a thermoplastic elastomer on the basis of copolyester (TPC) and at least one second plastic melt of a plastic without thermoplastic elastomer are joined in such a fashion that a foil composite material is formed, having an outer first layer consisting of one or several plies (11; 11 a, 11b) of the plastic without thermoplastic elastomer, a middle second layer consisting of one or several plies (12; 12a, 12b, 12c) of the plastic respectively comprising a thermoplastic elastomer on the basis of copolyester (TPC), and an outer third layer of one or several plies (13; 13a, 13b) of the plastic without thermoplastic elastomer, **characterized in that** the second plastic melt is polycarbonate or a mixture of polycarbonate with at least one different polyester (PEC), and that the coextrusion process is carried out at an extrusion temperature of the polycarbonate or of the mixture of polycarbonate with at least one different polyester of 270°C or higher.

2. The method according to claim 1, **characterized in that** in the formed foil composite (1) the outer layers (11; 11a, 11b; 13; 13a, 13b) starting from the middle layer (12; 12a, 12b, 12c) have an identical sequence of plies or the middle layer has a symmetrical structure, or that the formed foil composite material has a symmetrical structure.

3. The method according to claim 1 or 2, **characterized in that** the used thermoplastic elastomer on the basis of copolyester (TPC) is pre-dried so that it has a residual moisture content of less than 0.07%, preferably less than 0.01%.

4. The method according to claim 1, 2 or 3, **characterized in that** the one ply or the several plies of the second layer (12; 12a, 12b, 12c) each comprise a proportion of thermoplastic elastomer based on copolyester of 100%, from 50% to 75% or from 15% to 35%, and moreover preferably consist of polycarbonate or a mixture of polycarbonate with one or several different polyesters (PEC).

5. The method according to any of the preceding claims, **characterized in that** a foil composite material (1) is formed, the second layer (12; 12a, 12b, 12c) of which has a Shore D hardness between 45 and 70, preferably between 55 and 70, and/or that the thermoplastic elastomer on the basis of copolyester (TPC) has a melt volume rate (MVR) of between 3.5 and 8.

6. The method according to any of the preceding claims, **characterized in that** the total thickness of the formed foil composite material (1) amounts to between 50 µm and 350 µm, preferably between 70 and 150 µm and particularly preferably 105µm.

7. A foil composite material (1), **characterized in that** the foil composite material is manufactured using a method according to any of the preceding claims.

8. A method for manufacturing a card body, in particular for a portable data carrier, **characterized in that** a foil composite material (1) is manufactured in accordance with a method according to any of the claims 1 to 6 or such a foil composite material (1) is made available, and a multiplicity of layers (1, 2,..., 6) of plastic, comprising at least one layer of the foil composite material (1), are laminated with each other.

9. The method according to claim 8, **characterized in that** the laminating is effected at a temperature of between 120°C and 200°C, in particular between 125°C and 190°C, preferably between 130°C and 180°C, particularly preferably between 130°C and 140°C or between 175°C and 185°C, wherein the pressure during lamination preferably lies between 10 and 60 bar, in particular at 50 bar.

10. The method according to claim 8 or 9, **characterized in that** upon laminating the layers (1, 2,..., 6) at least one of the cover layers and in particular both cover layers consist of the foil composite material (1).

11. A card body, in particular for portable data carriers, comprising a multiplicity of layers (1, 2,..., 6) laminated above each other, **characterized in that** the card body is manufactured using a method according to any of the claims 8 to 10.

## Revendications

1. Procédé de fabrication d'un matériau composite en feuille (1) destiné à être utilisé comme couche ou feuille dans un corps de carte d'un support de données portable, cependant que, dans un processus de coextrusion, au moins une première masse fondue de matière plastique en matière plastique comprenant un élastomère thermoplastique à base de copolyester (TPC) et au moins une deuxième masse fondue de matière plastique en une matière plastique sans élastomère thermoplastique sont réunies de telle manière qu'un matériau composite en feuille est constitué, lequel comporte une première couche, extérieure, consistant en une ou plusieurs strates (11; 11a, 11b) de la matière plastique sans élastomère thermoplastique, une deuxième couche, médiane, consistant en une ou plusieurs strates (12; 12a, 12b, 12c) de la matière plastique comportant respectivement un élastomère thermoplastique à base de copolyester (TPC), et une troisième couche, extérieure, en une ou plusieurs strates (13; 13a, 13b) de la matière plastique sans élastomère thermoplastique, **caractérisé en ce que** la deuxième masse fondue de matière plastique est du polycarbonate ou un mélange de polycarbonate avec au moins un autre polyester (PEC), et **en ce que** le processus de coextrusion est effectué à une température d'extrusion du polycarbonate ou du mélange de polycarbonate avec au moins un autre polyester de 270° ou davantage.

2. Procédé selon la revendication 1, **caractérisé en ce que,** dans le matériau composite en feuille (1) constitué, les couches extérieures (11; 11a, 11b; 13; 13a, 13b) présentent, à partir de la couche médiane (12, 12a, 12b, 12c), une succession identique de strates, ou **en ce que** la couche médiane possède une structure symétrique, ou **en ce que** le matériau composite en feuille (1) constitué possède une structure symétrique.

3. Procédé selon la revendication 1 ou 2, **caractérisé en ce que** l'élastomère thermoplastique à base de copolyester (TPC) utilisé est pré-séché, de telle sorte qu'il présente une teneur résiduelle en humidité inférieure à 0,07 %, de préférence inférieure à 0,01 %.

4. Procédé selon la revendication 1, 2 ou 3, **caractérisé en ce que** la une strate ou les plusieurs strates de la deuxième couche (12; 12a, 12b, 12c) comprennent respectivement une proportion d'élastomère thermoplastique à base de copolyester qui s'élève à 100 %, à entre 50 % et 75 % ou à entre 15 % et 35 %, et consistent au demeurant de préférence en du polycarbonate ou en un mélange de polycarbonate avec un ou plusieurs autres polyesters (PEC).

5. Procédé selon une des revendications précédentes, **caractérisé en ce qu'**un matériau composite en feuille (1) est constitué, dont la deuxième couche (12; 12a, 12b, 12c) présente une dureté Shore D située entre 45 et 70, de préférence ente 55 et 70, et/ou **en ce que** l'élastomère thermoplastique à base de copolyester (TPC) présente un taux volumique de fusion (MVR) situé entre 3,5 et 8.

6. Procédé selon une des revendications précédentes, **caractérisé en ce que** l'épaisseur totale du matériau composite en feuille (1) constitué se situe entre 50 µm et 350 µm, de préférence entre 70 µm et 150 µm, et s'élève particulièrement de préférence à 105 µm.

7. Matériau composite en feuille (1), **caractérisé en ce que** le matériau composite en feuille est fabriqué avec un procédé selon une des revendications précédentes.

8. Procédé de fabrication d'un corps de carte, en particulier pour un un support de données portable, **caractérisé en ce qu**'un matériau composite en feuille (1) est fabriqué suivant un procédé selon une des revendications de 1 à 6, ou en ce qu'un tel matériau composite en feuille (1) est mis à disposition et une pluralité de couches (1, 2, ..., 6) en matière plastique comprenant au moins une couche en le matériau composite en feuille (1) sont laminées les unes aux autres.

9. Procédé selon la revendication 8, **caractérisé en ce que,** dans le laminage a lieu à une température située entre 120° et 200°, en particulier entre 125° et 190°, de préférence entre 130° et 180°, particulièrement de préférence entre 130° et 140° ou 175° et 185°, la pression lors du laminage se situant de préférence entre 10 et 60 bar, en particulier à 50 bar.

10. Procédé selon la revendication 8 ou 9, **caractérisé en ce que,** lors du laminage des couches (1, 2, ..., 6), au moins une des couches de recouvrement et en particulier les deux couches de recouvrement consistent en le matériau composite en feuille (1).

11. Corps de carte, en particulier pour supports de données portables, comprenant une pluralité de couches (1, 2, ..., 6) laminées les unes sur les autres, **caractérisé en ce que** le corps de carte est fabriqué avec un procédé selon une des revendications de 8 à 10.
